# EUROPEAN PATENT SPECIFICATION

(11) **EP 1 269 676 B1**
(45) Date of publication and mention of the grant of the patent: **06.01.2010**
(21) Application number: 01917404.4
(22) Date of filing: 03.04.2001
(51) Int. Cl.: H04L 1/20, H04L 1/00

(54) **ESTIMATING COMMUNICATION QUALITY**
SCHÄTZUNG DER KOMMUNIKATIONSQUALITÄT
EVALUATION DE LA QUALITE D'UNE COMMUNICATION

(30) Priority: 03.04.2000 GB 0008117
(43) Date of publication of application: 02.01.2003
(73) Proprietor: Nokia Siemens Networks Oy, 02610 Espoo (FI)
(72) Inventor: HAKALIN, Petteri, 29639 Malaga (ES); MELERO, Juan, E-29016 Malaga (ES)
(74) Representative: Borgström, Markus
(86) International application number: PCT/IB2001/000627
(87) International publication number: WO 2001/076122

(56) References cited:
- EP-A- 0 853 393
- WO-A-98/53630
- GB-A- 2 337 425
- US-A- 5 828 672

## Description

This invention relates to estimating communication quality, for example to improving estimation of error rates in received data. The invention is preferably suitable for se in a telecommunications system such as a cellular radio telecommunications network.

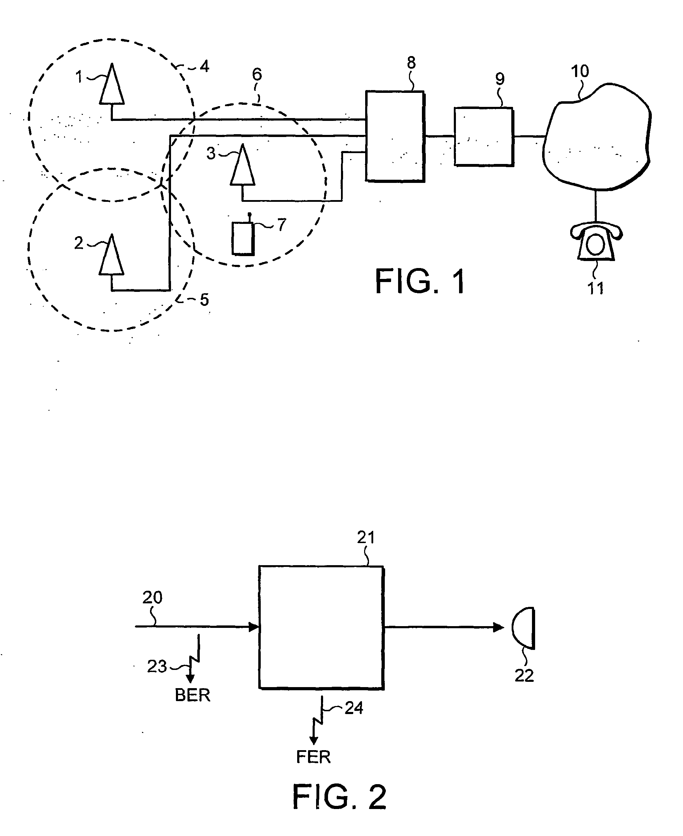

Figure 1 shows schematically the configuration of a typical cellular radio telecommunications network such as a GSM (Global System for Mobile Communications) system. The network comprises a number of base transmission stations (BTSs) 1, 2, 3. Each base-station has a radio transceiver capable of transmitting radio signals to and receiving radio signals from the area of a cell 4, 5, 6 etc. next to the base-station. By means of these signals the base-station can communicate with a mobile station (MS) terminal 7 in that cell, which itself includes a radio transceiver. Each base station is connected via a base station controller 8 to a mobile switching centre (MSC) (not shown), which is linked in turn via a gateway MSC 9 to the public telephone network 10 and/or to other networks such as packet data networks. By means of this system a user of the MS 7 can establish a telephone call to a terminal 11 in another network.

The signals between a BTS and an MS carry digital data. Analogue voice data to be carried over the link is encoded into digital data using a suitable speech codec. The encoded data is then allocated to time slots and transmitted in those time slots to the recipient unit. In typical TDMA systems a group of consecutive time slots (e.g. 8 time slots in the GSM system) make up a TDMA frame. For example, in the GSM system TDMA frame is made up of 8 consecutive time slots. Up to 8 different users at full data rate can be allocated to a single TDMA frame, each user having its own time slot. A slot may alternatively be shared between two users at half data rate, in which case those users are allocated the same timeslot but in alternate TDMA frames. A user's speech data is carried in the frames allocated to that user. If the user is a full data rate user then a speech frame of the user will occupy one timeslot of eight consecutive TDMA frames: for example if a TDMA frame lasts for 4,615 ms (as in GSM), one speech frame will taking 8 x 4,615 ms to be fully sent. If the user is a half data rate user his speech frame contains half as much data as that of a full rate user, and occupies one timeslot of four alternate TDMA frames. Thus in GSM the total time taken to transmit a half rate speech frame is essentially the same as the time taken to transmit a full rate speech frame. At the recipient unit the data is decoded to regenerate the analogue voice data. Figure 2 illustrates schematically the receiver path in the mobile station. (The considerations at the BTS are analogous). Incoming received data at 20 is passed to a decoder 21. The decoded analogue voice signals are passed to an output unit 22.

In typical systems the quality or error rate of the link is estimated by measuring characteristics of the received signal. A bit error rate (BER) before channel decoding can be estimated for the received digital bitstream, as indicated schematically at 23. The bit error rate represents the ration of badly received bits to the total number of received bits (before channel decoding). In addition, using check bits that are transmitted as part of the bitstream the decoder 21 can detect badly received voice data frames. This allows a frame erasure rate (FER) to be determined, as indicated schematically at 24. The frame erasure rate represents the percentage of received frames being dropped due to a high number of non-corrected bit errors in the frame. Other methods can be used to determine whether a received frame is to be considered as bad. For example, if the BER before channel decoding is high the frame could automatically be assumed to be bad, even if the CRC would indicate that the frame was acceptable. This is especially significant in normal full rate data reception, where the CRC occupies three bits, so even if plain noise were sent one in eight frames could on average be taken to be a valid frame

In a typical system such as GSM the BER before channel decoding is estimated and that estimate reported to a control unit which can control the system so as to maintain adequate link quality, for example by instructing an increase or decrease in transmission power or a handover of an MS to another BTS.

The estimated BER before channel decoding is a direct indication of the level of errors over the link and has therefore been used in prior systems as an indication of the quality of the link on which to base such control measures. In the conventional GSM system only one voice codec, or only very few codecs, have been available. Therefore, in many cases the relationship between BER and perceived link quality has been easily predictable, although problems exist for example between frequency hopping and non-hopping channels. However, with the implementation of more recent developments that make use of variable compression ratios and alternative error correction techniques - such as AMR (adaptive multi-rate), GPRS (general packet radio service) and EGPRS (EDGE GPRS) or +ECSD equivalents - the estimated BER becomes a less accurate indicator of true link quality, because the true quality of received voice data as perceived by a user is also dependant on the level of compression and/or error correction that can be performed under the protocols in use over the link. As the proportion of received bits used for error correction increases relative to those used for encoded voice data the potential for efficient error correction increases and BER before channel decoding becomes less accurate as an indicator of link quality.

There is therefore a need for a means of providing a more accurate indicator of link quality, for example to allow link quality to be better controlled. In general, a preferred attribute of a quality measure for any network would be that it can forecast quality problems and trigger action such as a power level increase or handover before actual problems arise.

One option would be to introduce individual definitions of target or threshold reception quality (RXQUAL) for each different combination of codec and RF (radio frequency) channel configuration that is to be usable in the network. However, this would introduce a large number of additional parameters to be taken account of in handover and power control calculations, and would involve an increased amount of signalling (over the Abis interface to the base station controller (BSC) in GSM) as the codec mode currently in use for each mobile station would have to be transmitted to the unit performing the handover and power control calculations. Another option would be to base the link quality assessment purely on the basis of more detailed measurements carried out on the signals received at the BTSs over the uplink from the mobile stations. Compared to the first option this could reduce the amount of data needed to be reported from the mobile stations to the network equipment. However, the uplink does not necessarily reflect accurately the quality of the downlink from the BTSs to the MSs.

Thus the usage of channel/codec based RXQUAL thresholds would mean hundreds of new parameters only for HO&PC algorithms, which would most likely be seen as unacceptable by operators. Moreover, the performance of the network could not be assessed or monitored from plain RXQUAL statistics.

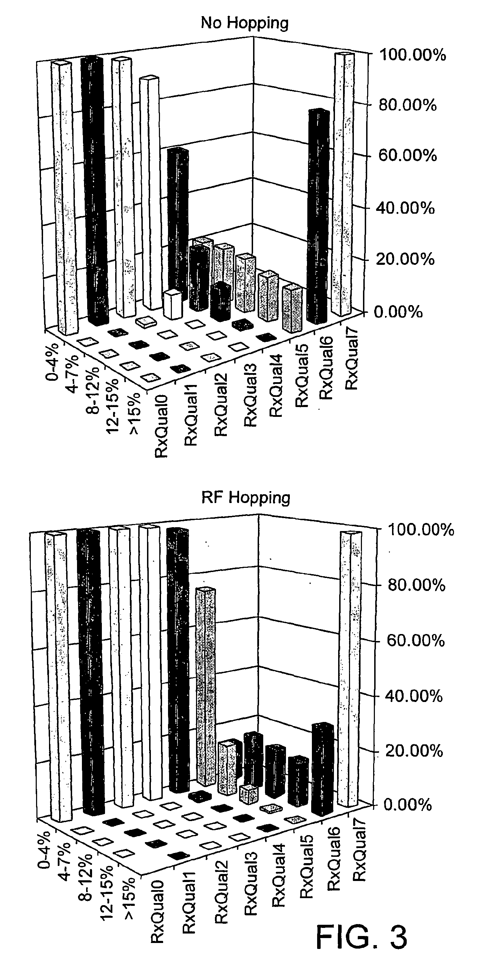

Figure 3 illustrates a simulation of the correlation between reception quality threshold (RXQUAL) and FER in frequency hopping and non-hopping networks. Figure 3 indicates that even for a quality target of RXQUAL class 5 a significant number of frame erasures are caused when the channel is non-hopping; whereas for a frequency hopping channel RXQUAL5 can still be assumed to provide good quality. This problem is even more significant when the performance of different codecs is compared in terms of RXQUAL. Due to these problems, the optimisation of for example handover and power control algorithms is challenging if not impossible.

An FER-based triggering system would have the disadvantage of slow reaction, as speech frames would have to be already lost before any triggering to respond to low signal quality would be made.

GB Publication 2337425 describes a method and an apparatus for estimating the quality of service of a radio channel in a radio communications system. The bit error rate for each of a set of plural samples of a signal on a radio channel is estimated. The number of bit error values in the set falling within each of a plurality of particularly bit error rate ranges is determined. The determined distribution of the bit error rate values in the sample set is then compared with predetermined reference bit error rate distributions which each represents a different channel service quality.

PCT Publication WO-98/53630 describes a method and system for measuring the speech quality in a mobile cellular telecommunications network using available radio link parameters. In a preferred embodiment, the method includes receiving a set of radio link parameters. Temporal information is obtained from the radio link parameters to create a set of temporal parameters which can be statistically analysed. The temporal parameters are combined to yield a set of correlated parameters which are more closely related to the speech quality.

EP-0853393 describes a method for measuring the error rate of a received signal by a received error measuring unit and a target signal to interference ratio is changed by a target signal to interference ratio decision unit using the error rate.

US Patent 5,828,672 describes a system for determining when a radio telecommunications network should switch between a first grade of service and a second grade of service based upon a highly accurate and reliable estimate of the bit error rate.

According to one aspect of the present invention there is provided a method for estimating quality of communications between a transmitter and a receiver over a communications link operable according to one of a plurality of communication modes and with one of a plurality of quality measures, data being carried over the link as a plurality of frames, the method characterized by and comprising analysing data received by the receiver over the link to determine the proportion of received frames that are deemed to have been received erroneously; estimating on the basis of that proportion a frame error probability; and storing that frame error probability in conjunction with the one of the plurality of quality measures and the one of the communication modes in use over the link.

Preferably, the method may set a communication parameter of the link on the basis of that estimation.

According to a second aspect of the present invention there is provided a communications system comprising a transmitter and a receiver and apparatus for estimating quality of communications between the transmitter and the receiver over a communications link operable according to one of a plurality of communication modes and with one of a plurality of quality measures, data being carried over the link as a plurality of frames, the apparatus comprising and characterized by means for analysing data received by the receiver over the link to determine the proportion of received frames that are deemed to have been received erroneously; means for estimating on the basis of that proportion a frame error probability; and a data store for storing that frame error probability in conjunction with the one of the plurality of quality measures and the one of the communication modes in use over the link.

The apparatus may further comprise means for setting a communication parameter of the link on the basis of that estimation.

Suitably the communication modes include modes that differ in their radio frequency characteristics. The communication modes preferably include at least one frequency-hopped mode and at least one non-frequency-hopped mode. Suitably the communication modes include modes that differ in their data compression and/or encoding characteristics. The communication modes preferably include at least one operable with a first bit-rate of speech data and one operable with a second rate of speech data.

The quality measure may be an estimate of bit error rate, preferably before channel decoding.

The proportion of received frames that are deemed to have been received erroneously may be a frame erasure rate for the link.

The said analysing step is suitably performed at the receiver. A method as set out above may include the step of the receiver transmitting data defining the proportion of received frames that are deemed to have been received erroneously, and wherein the said storage step is performed remotely from the receiver.

Preferably the frames carry speech data. Preferably the frames carry data encoded according to a speech encoding scheme.

The transmitter and the receiver are suitably operable according to the Global System for Mobile Communications or a derivative thereof.

The communication parameter may be a communication mode to be used over the link, or a quality target to be used over the link, or a transmission power to be used over the link. One of the transmitter and the receiver may be a mobile station and the other of the transmitter and the receiver may be a base transmission station and the communication parameter may be indicative of initiation of a handover of the mobile station to communication with another base station.

Suitably the transmission power is controlled to be increased if the said proportion exceeds the stored probability. Suitably the transmission power is reduced if the stored probability exceeds the said proportion.

The determination of a quality measure may be by means of a look-up table.

The said means for analysing may be located in the receiver, or may be elsewhere.

The present invention will now be described by way of example with reference to the accompanying drawings, in which
figure 1 shows schematically a cellular network;
figure 2 illustrates data reception;
figure 3 illustrates simulated results of a correlation between reception quality threshold (RXQUAL) and FER in frequency hopping and non-hopping networks;
figure 4 presents frame erasure probability values from an example simulation; and
figure 5 is a schematic diagram of relevant parts of a GSM cellular network.

The present example will be described with specific reference to the GSM system. However, the invention is not limited to application in the GSM system.

The term frame has been used in this context as a reference to any kind of arrangement enclosing or setting off a piece of information comprising at least one identifiable piece of information. The TDMA frame used in GSM is therefore used just as an example and should not be interpret as a limitation to the scope of protection.

The system described below makes use of an estimate of frame erasure probability (FEP). One preferred aim of this parameter is to provide a common quality criterion which can be employed successfully for different combinations of channel type and codec type. The FEP can then be used as one basis for making decisions on whether to take measures to increase quality or, if quality is excessive at the expense of other users, to reduce quality.

One method to derive an FEP makes use of knowledge of the uplink FER and the uplink RXQUAL to build a matrix with possible channel/codec combinations. Table 1 below presents an example of such matrix in a network with mobile stations that can operate the GSM half rate (HR), full rate (FR), enhanced full rate (EFR) and adaptive multi-rate (AMR) codecs. In table 1 frequency hopped (FH) and non-frequency-hopped (non-FH) channel types are illustrated.

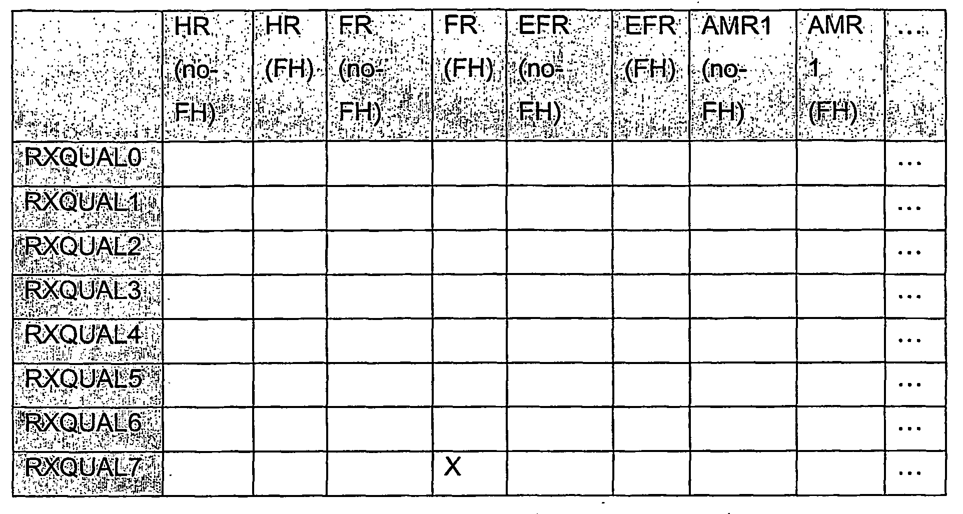

It will be understood that the above table is just an example, and the columns could be extended to include for example the number of frequencies in the hopping list.

In use uplink FER and RXQUAL data is collected as a link is in use, and is used to derive values for the cell of the matrix corresponding to the conditions of the link. For example, if a call using the full rate codec is allocated to frequency hopping transmission mode, all FER measurements while the RXQUAL was 7 are collected and used to derive a probability of frame erasure for the corresponding cell of the matrix (marked X in table 1). The matrix can be used for quality prediction once all the required cells (preferably at least all the cells corresponding to conditions that may be encountered during use) are filled. Preferably a relatively large number of samples is used to derive the probabilities of frame erasure, so as to give the matrix data statistical reliability.

Individual matrices of this sort may be derived for the uplink and the downlink, or only one may be used. Instead of a matrix, the data of the matrix may be analysed and a formula determined for deriving the value in each cell of the matrix.

The filled matrix has values of frame erasure probabilities associated to each different channel/codec pair and each different RXQUAL class. Once the matrix is filled, both downlink and uplink RXQUAL values can be mapped to corresponding frame erasure probabilities. These probabilities can be used in the algorithms for making decisions on handover and/or power control (or other quality control measures) as well as for performance monitoring of the system. The system may be combined with other approaches for determining quality, either with the aim of supplementing the data in the table so as to increase accuracy of estimation, or to cope with circumstances for which the matrix has no values or statistically too few samples.

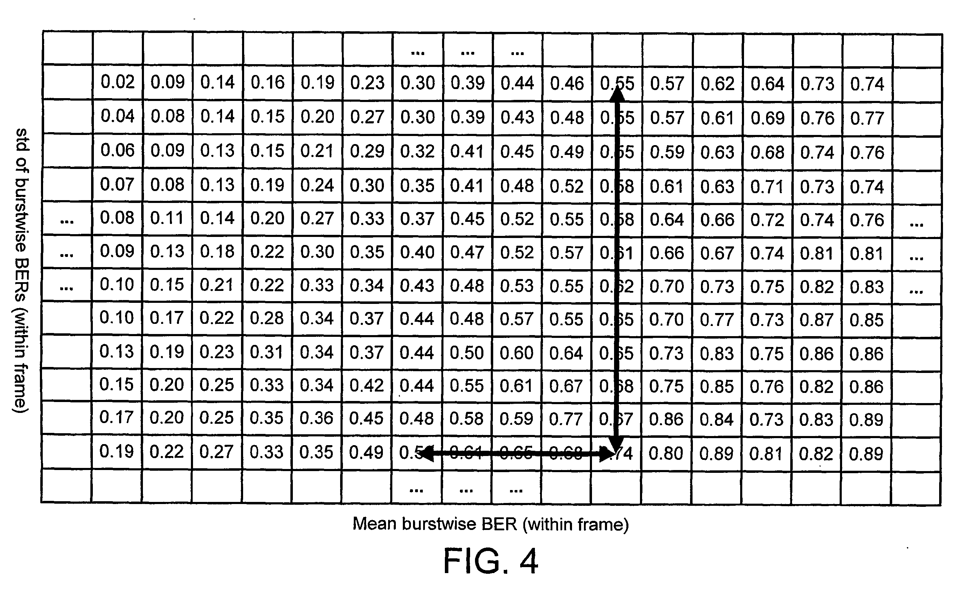

There are other possibilities to assess the frame erasure probability (FEP). Another option would be to assess the FEP in the receiver, where more information about the channel is available, and to send the information to the network side of the system when the required data have been calculated. One such method would be to use a measure of variation of bit error rate (BER) and the mean of BER within the speech frame to estimate the FEP. Figure 4 shows FEP values from an example simulation where the FEP is presented as a function of mean and standard deviation of BER within a speech frame. An important factor is that the FEP may now be evaluated at a BTS and transmitted to whatever control unit is to do the corresponding decision making using the FEP.

Another more implementation-specific way to use FEP in handover and power control algorithms would be to map the FEP values into a number of classes: for example into eight classes like the present convention for RXQUAL values. In this way current handover and power control algorithms could be used without significant modification. The classes may be defined by linear subdivision of the full expected or actual range of FEP values, or by another method.

The handover and power control algorithms can be optimized according to each codec/channel condition while FEP essentially provides a common quality measure for all services. This means that the number of quality thresholds in handover and power control algorithms can be substantially reduced over the alternative approaches as outlined above. The FEP can also be used to assess the performance of the network.

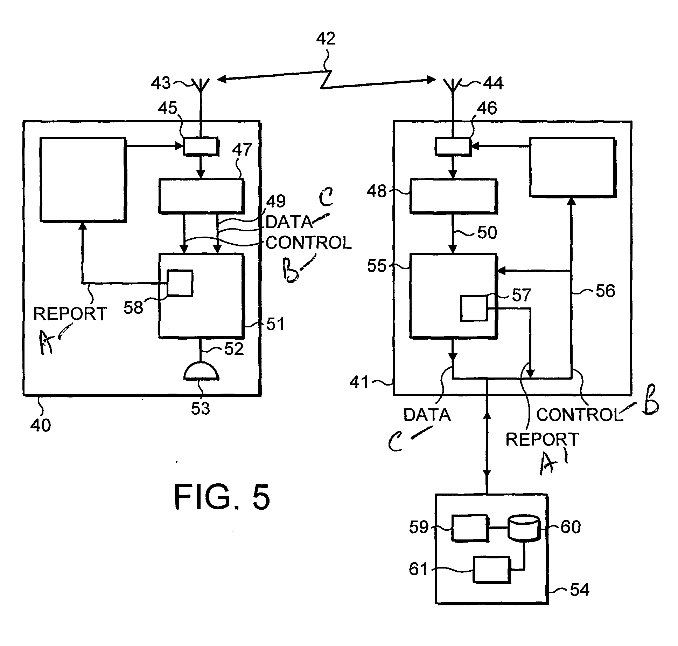

Figure 5 illustrates the architecture of a GSM system for implementing a preferred embodiment of the invention. Figure 5 shows a mobile station 40 in radio communication with a base transmission station 41 over a wireless link 42. The antennae 43, 44 of the mobile station and the BTS are connected to respective duplexers 45, 46 which combine the incoming and outgoing signals. The generation of the outgoing signals for transmission is not illustrated in figure 5. The incoming signals are passed to respective amplification and demodulation units 47, 48 which derive received digital bitstreams at 49, 50. In the mobile station the received bitstream is processed by decoding apparatus shown generally at 51 to decode the data and derive an analogue speech signal at 52. The speech signal is applied to a loudspeaker 53 so that it can be heard by a user. In the BTS the received digital signal at 50 is transformed into a signal suitable for onward transmission to BSC 54 by means of processing unit 55.

The transmission power used over the link 42, the codec used for speech transmission over link 42, the target RXQUAL for link 42 and other parameters such as handover operations are under the control of a unit such as BSC 54. (The functions could alternatively be performed at a mobile switching centre (MSC)). These parameters are transmitted from that control unit via link 56 to the respective MS and BTS units to allow them to encode, transmit and decode their signals accordingly.

In the units 51 and 55 are respective frame erasure rate detectors 57, 58 which determine the FER for received signals. (It should be noted that at least the mobile station does not have to calculate any statistical value of the frame errors (e.g. rate); instead the mobile could check the speech frames - frame by frame - and if a frame were found to have too many errors it could be not directed to the audio equipment of the mobile station. In that case the unit 51 could be omitted.) The FER data is reported, together (if necessary) with other link status data such as the link type, codec type and target RXQUAL as report data to the control unit - in this example BSC 54. In an initial mode of operation this data, together (if necessary) with data already known to the BSC on the status of the link is used by a FEP processor 59 to derive a matrix of FEP values in the form of that of table 1. The matrix is stored in data store 60. The matrix could alternatively be derived from simulations or from measurements carried out in another analogous system. The FEP values are mapped into eight classes, corresponding to the eight classes available for RXQUAL values.

A link controller 61 in the BSC has access to the matrix stored in the store 60. With knowledge of data on the status of the link (for example the link type, the codec in use and the set RXQUAL target) the link controller can determine the expected FEP from the stored matrix. The link controller operates to analyze that FEP (or FEP class) to issue handover and power control commands to the BTS and MS, for example, if uplink FEP exceeds a preset threshold the BSC may cause the BTS to issue an "increase transmit power" command to the mobile station. It will be clear that power increase and decrease commands for the uplink and the downlink, and at constant or variable rates, and hard and/or soft handover commands may be generated in logically analogous way.

Numerous modifications of the specific examples described above may be made. The approaches described above may be applied individually to the uplink or to the downlink, or to both. The approaches described above may be implemented in telecommunications systems operable according to other systems and standards, for example the third generation (3G) standard. In a system operable according to that standard reporting of data to the BSC or MSC or equivalent could be performed over the lu interface.

## Claims

1. A method for estimating quality of communications between a transmitter and a receiver over a communications link (42) operable according to one of a plurality of communication modes and with one of a plurality of quality measures, data being carried over the link (42) as a plurality of frames, the method **characterized by** and comprising:
analysing data received by the receiver over the link (42) to determine the proportion of received frames that are deemed to have been received erroneously;
estimating on the basis of that proportion a frame error probability; and
storing that frame error probability in conjunction with the one of the plurality of quality measures and the one of the communication modes in use over the link (42).

2. A method as claimed in claim 1, wherein the communication modes include modes that differ in their radio frequency characteristics.

3. A method as claimed in claim 2, wherein the communication modes include at least one frequency-hopped mode and at least one non-frequency-hopped mode.

4. A method as claimed in any preceding claim, wherein the quality measures are bit error rate estimates.

5. A method as claimed in any preceding claim, wherein the proportion of received frames that are deemed to have been received erroneously is a frame erasure rate for the link (42).

6. A method as claimed in any preceding claim, wherein the said analysing step is performed at the receiver.

7. A method as claimed in claim 6, comprising the step of the receiver transmitting data defining the proportion of received frames that are deemed to have been received erroneously, and wherein the said storage step is performed remotely from the receiver.

8. A method as claimed in any preceding claim, wherein the frames carry speech data.

9. A method as claimed in claims 1 to 8, further comprising:
setting a communication parameter of the communications link (42) on the basis of that estimation.

10. A method as claimed in claim 9, wherein the communication parameter is a communication mode to be used over the link (42).

11. A method as claimed in claim 9, wherein the communication parameter is a quality target to be used over the link (42).

12. A method as claimed in claim 9, wherein one of the transmitter and the receiver is a mobile station (40) and the other of the transmitter and the receiver is a base transmission station (41) and the communication parameter is indicative of initiation of a handover of the mobile station (40) to communication with another base station.

13. A method as claimed in claim 9, wherein the communication parameter is a transmission power to be used over the link (42).

14. A method as claimed in claim 13, wherein the transmission power is increased if the said proportion exceeds the stored probability.

15. A method as claimed in claims 14 or 15, wherein the transmission power is reduced if the stored probability exceeds the said proportion.

16. A method as claimed in any of the previous claims, wherein the frames carry speech data.

17. A method as claimed in any of the previous claims, wherein the frames carry data encoded according to a speech encoding scheme.

18. A method as claimed in any preceding claim, wherein the transmitter and the receiver are operable according to the Global System for Mobile Communications or a derivative thereof.

19. A communications system comprising a transmitter and a receiver and apparatus for estimating quality of communications between the transmitter and the receiver over a communications link (42) operable according to one of a plurality of communication modes and with one of a plurality of quality measures, data being carried over the link as a plurality of frames, the apparatus comprising and **characterized by**:
means for analysing data (57, 58) received by the receiver over the link (42) to determine the proportion of received frames that are deemed to have been received erroneously;
means for estimating (59) on the basis of that proportion a frame error probability; and
a data store (60) for storing that frame error probability in conjunction with the one of the plurality of quality measures and the one of the communication modes in use over the link (42).

20. A communications system as claimed in claim 19, the apparatus further comprising:
means for setting (54) a communication parameter of the link on the basis of that estimation.

21. A communications system as claimed in claim 20, wherein the means for analysing is located in the receiver.

## Patentansprüche

1. Verfahren zum Schätzen der Qualität der Kommunikation zwischen einem Sender und einem Empfänger über eine Kommunikationsstrecke (42), die gemäß einer von mehreren Kommunikationsbetriebsarten und mit einem von mehreren Qualitätsmaßen betreibbar ist, wobei Daten über die Strecke (42) als mehrere Rahmen geführt werden, wobei das Verfahren durch die folgenden Schritte **gekennzeichnet** ist:
Analysieren von durch den Empfänger über die Strecke (42) empfangenen Daten, um den Anteil empfangener Rahmen zu bestimmen, der als falsch empfangen angesehen wird;
Schätzen einer Rahmenfehlerwahrscheinlichkeit auf der Basis dieses Anteils; und
Speichern dieser Rahmenfehlerwahrscheinlichkeit in Verbindung mit dem einen der mehreren Qualitätsmaße und der einen der Kommunikationsbetriebsarten, die über die Strecke (42) im Gebrauch sind.

2. Verfahren nach Anspruch 1, wobei die Kommunikationsbetriebsarten Betriebsarten umfassen, die sich in Bezug auf ihre Hochfrequenzeigenschaften unterscheiden.

3. Verfahren nach Anspruch 2, wobei die Kommunikationsbetriebsarten mindestens eine frequenzgesprungene Betriebsart und mindestens eine nicht frequenzgesprungene Betriebsart umfassen.

4. Verfahren nach einem der vorhergehenden Ansprüche, wobei die Qualitätsmaße Bitfehlerratenschätzungen sind.

5. Verfahren nach einem der vorhergehenden Ansprüche, wobei der Anteil empfangener Rahmen, der als falsch empfangen angesehen wird, eine Rahmenlöschungsrate für die Strecke (42) ist.

6. Verfahren nach einem der vorhergehenden Ansprüche, wobei der Analyseschritt im Empfänger ausgeführt wird.

7. Verfahren nach Anspruch 6, bei dem der Empfänger Daten sendet, die den Anteil empfangener Rahmen definieren, der als falsch empfangen angesehen wird, und wobei der Speicherschritt von dem Empfänger abgesetzt ausgeführt wird.

8. Verfahren nach einem der vorhergehenden Ansprüche, wobei die Rahmen Sprachdaten führen.

9. Verfahren nach Anspruch 1 bis 8, ferner mit dem folgenden Schritt:
Setzen eines Kommunikationsparameters der Kommunikationsstrecke (42) auf der Basis dieser Schätzung.

10. Verfahren nach Anspruch 9, wobei der Kommunikationsparameter eine über die Strecke (42) zu verwendende Kommunikationsbetriebsart ist.

11. Verfahren nach Anspruch 9, wobei der Kommunikationsparameter ein über die Strecke (42) zu verwendendes Qualitätsziel ist.

12. Verfahren nach Anspruch 9, wobei von dem Sender und dem Empfänger einer eine Mobilstation (40) und der andere des Senders und des Empfängers eine Basisübertragungsstation (41) ist und der Kommunikationsparameter die Einleitung eines Handover der Mobilstation (40) zur Kommunikation mit einer anderen Basisstation anzeigt.

13. Verfahren nach Anspruch 9, wobei der Kommunikationsparameter eine über die Strecke (42) zu verwendende Sendeleistung ist.

14. Verfahren nach Anspruch 13, wobei die Sendeleistung vergrößert wird, wenn der Anteil die gespeicherte Wahrscheinlichkeit übersteigt.

15. Verfahren nach Anspruch 14 oder 15, wobei die Sendeleistung verringert wird, wenn die gespeicherte Wahrscheinlichkeit den Anteil übersteigt.

16. Verfahren nach einem der vorhergehenden Ansprüche, wobei die Rahmen Sprachdaten führen.

17. Verfahren nach einem der vorhergehenden Ansprüche, wobei die Rahmen gemäß einem Sprachcodierungsschema codierte Daten führen.

18. Verfahren nach einem der vorhergehenden Ansprüche, wobei der Sender und der Empfänger gemäß dem Global System for Mobile Communications oder einer Ableitung davon betreibbar sind.

19. Kommunikationssystem mit einem Sender und einem Empfänger und einer Vorrichtung zur Schätzung der Qualität der Kommunikation zwischen dem Sender und dem Empfänger über eine Kommunikationsstrecke (42), die gemäß einer von mehreren Kommunikationsbetriebsarten und mit einem von mehreren Qualitätsmaßen betreibbar ist, wobei Daten über die Strecke als mehrere Rahmen geführt werden, wobei die Vorrichtung Folgendes umfasst und **dadurch gekennzeichnet ist**:
Mittel zum Analysieren von Daten (57, 58), die durch den Empfänger über die Strecke (42) empfangen werden, um den Anteil empfangener Rahmen zu bestimmen, der als falsch empfangen angesehen wird;
Mittel zum Schätzen (59) einer Rahmenfehlerwahrscheinlichkeit auf der Basis dieses Anteils; und
einen Datenspeicher (60) zum Speichern dieser Rahmenfehlerwahrscheinlichkeit in Verbindung mit dem einen der mehreren Qualitätsmaße und der einen der Kommunikationsbetriebsarten, die über die Strecke (42) in Gebrauch sind.

20. Kommunikationssystem nach Anspruch 19, wobei die Vorrichtung ferner Folgendes umfasst:
Mittel zum Setzen (54) eines Kommunikationsparameters der Strecke auf der Basis dieser Schätzung.

21. Kommunikationssystem nach Anspruch 20, wobei sich die Mittel zum Analysieren in dem Empfänger befinden.

## Revendications

1. Procédé d'estimation de qualité de communications entre un émetteur et un récepteur sur une liaison de communications (42) utilisable selon un d'une pluralité de modes de communication et avec une d'une pluralité de mesures de qualité, des données étant transportées sur la liaison (42) sous la forme d'un pluralité de trames, le procédé étant **caractérisé par** et comprenant :
l'analyse de données reçues par le récepteur sur la liaison (42) pour déterminer la proportion de trames reçues qui sont réputées avoir été reçues de façon erronée ;
l'estimation sur la base de cette proportion d'une probabilité d'erreurs sur les trames ; et
la mémorisation de cette probabilité d'erreurs sur les trames en conjonction avec l'une de la pluralité de mesures de qualité et l'un des modes de communication en usage sur la liaison (42).

2. Procédé selon la revendication 1, dans lequel les modes de communication incluent des modes qui diffèrent quant à leurs caractéristiques de fréquences radio.

3. Procédé selon la revendication 2, dans lequel les modes de communication incluent au moins un mode à sauts de fréquence et au moins un mode sans saut de fréquence.

4. Procédé selon l'une quelconque des revendications précédentes, dans lequel les mesures de qualité sont des estimations de taux d'erreurs sur les bits.

5. Procédé selon l'une quelconque des revendications précédentes, dans lequel la proportion de trames reçues qui sont réputées avoir été reçues de façon erronée est un taux d'effacement de trames pour la liaison (42).

6. Procédé selon l'une quelconque des revendications précédentes, dans lequel ladite étape d'analyse est mise en oeuvre au niveau du récepteur.

7. Procédé selon la revendication 6, comprenant l'étape de transmission par le récepteur de données définissant la proportion de trames reçues qui sont réputées avoir été reçues de façon erronée, et dans lequel ladite étape de mémorisation est mise en oeuvre à distance du récepteur.

8. Procédé selon l'une quelconque des revendications précédentes, dans lequel les trames transportent des données vocales.

9. Procédé selon les revendications 1 à 8, comprenant en outre :
la fixation d'un paramètre de communication de la liaison de communications (42) sur la base de cette estimation.

10. Procédé selon la revendication 9, dans lequel le paramètre de communication est un mode de communication à utiliser sur la liaison (42).

11. Procédé selon la revendication 9, dans lequel le paramètre de communication est une cible de qualité à utiliser sur la liaison (42).

12. Procédé selon la revendication 9, dans lequel l'un de l'émetteur et du récepteur est une station mobile (40) et l'autre de l'émetteur et du récepteur est une station de transmission de base (41) et le paramètre de communication est indicatif de l'initiation d'un transfert de la station mobile (40) à une communication avec une autre station de base.

13. Procédé selon la revendication 9, dans lequel le paramètre de communication est une puissance de transmission à utiliser sur la liaison (42).

14. Procédé selon la revendication 13, dans lequel la puissance de transmission est augmentée si ladite proportion excède la probabilité mémorisée.

15. Procédé selon les revendications 14 ou 15, dans lequel la puissance de transmission est diminuée si la probabilité mémorisée excède ladite proportion.

16. Procédé selon l'une quelconque des revendications précédentes, dans lequel les trames transportent des données vocales.

17. Procédé selon l'une quelconque des revendications précédentes, dans lequel les trames transportent des données codées selon un programme d'encodage de la parole.

18. Procédé selon l'une quelconque des revendications précédentes, dans lequel l'émetteur et le récepteur sont utilisables selon le système mondial de communications mobiles ou un dérivé de celui-ci.

19. Système de communications comprenant un émetteur et un récepteur et un appareil pour estimer une qualité de communications entre l'émetteur et le récepteur sur une liaison de communications (42) utilisable selon un d'une pluralité de modes de communication et avec une d'une pluralité de mesures de qualité, des données étant transportées sur la liaison sous la forme d'une pluralité de trames, l'appareil comprenant et étant **caractérisé par** :
un moyen pour analyser des données (57, 58) reçues par le récepteur sur la liaison (42) pour déterminer la proportion de trames reçues qui sont réputées avoir été reçues de façon erronée ;
un moyen pour estimer (59) sur la base de cette proportion une probabilité d'erreurs sur les trames ; et
une mémoire de données (60) pour mémoriser cette probabilité d'erreurs sur les trames en conjonction avec l'une de la pluralité de mesures de qualité et l'un des modes de communication en usage sur la liaison (42).

20. Système de communications selon la revendication 19, l'appareil comprenant en outre :
un moyen pour fixer (54) un paramètre de communication de la liaison sur la base de cette estimation.

21. Système de communications selon la revendication 20, dans lequel le moyen pour analyser est situé dans le récepteur.
